(19) Europäisches Patentamt
European Patent Office
Office européen des brevets

(11)  EP 0 569 429 B1

(12)  EUROPEAN PATENT SPECIFICATION

(45) Date of publication and mention
of the grant of the patent:
**21.08.1996 Bulletin 1996/34**

(21) Application number: **92903707.5**

(22) Date of filing: **31.01.1992**

(51) Int. Cl.$^6$: **B60G 17/02**, B60G 17/08

(86) International application number:
**PCT/GB92/00183**

(87) International publication number:
**WO 92/13731 (20.08.1992 Gazette 1992/22)**

(54) **A VEHICLE SUSPENSION DEVICE**

AUFHÄNGUNGSVORRICHTUNG FÜR FAHRZEUGE

SYSTEME DE SUSPENSION DE VEHICULE

(84) Designated Contracting States:
**BE DE ES FR GB IT SE**

(30) Priority: **31.01.1991 GB 9102059**

(43) Date of publication of application:
**18.11.1993 Bulletin 1993/46**

(73) Proprietors:
• **LOTUS CARS LIMITED**
  **Norwich, Norfolk NR14 8EZ (GB)**
• **TRW INC.**
  **Cleveland Ohio 44124 (US)**

(72) Inventors:
• **DAVIS, John Peter c/o LIGIER**
  **MAGNY EN COURS, 50470 (FR)**
• **BARRON, Richard John**
  **Stuart, Florida B4997 (US)**

(74) Representative: **Mayes, Stuart David et al**
  **BOULT, WADE & TENNANT**
  **27 Furnival Street**
  **London, EC4A 1PQ (GB)**

(56) References cited:
EP-A- 0 424 784          DE-A- 2 430 138
DE-A- 3 616 541          DE-A- 3 619 755
DE-A- 3 742 883          GB-A- 2 199 618
US-A- 2 802 674          US-A- 3 191 954
US-A- 4 090 723

• PATENT ABSTRACTS OF JAPAN vol. 14, no. 319
(M-996)(4262) 9 July 1990 & JP-A-2 106 421
(ISUZU MOTORS) 18 April 1990

## Description

This invention relates to a vehicle suspension device.

In particular, the invention relates to a vehicle suspension device comprising an actuator for a vehicle suspension system of the kind in which the actuator is positioned between a vehicle hub and the sprung mass of the vehicle and the motion of the sprung mass relative to the hub is determined or assisted by the actuator. The actuator may be used in parallel with a normal vehicle road spring or in exceptional circumstances may completely replace the vehicle road spring.

The applicant has previously disclosed embodiments of vehicle suspension devices in both EP-A-0114757 and EP-A-0371709.

In the publication EP-A-0114757 there is described an active suspension system for a vehicle which incorporates various vehicle suspension devices. The disclosed vehicle suspension devices comprise actuators acting in parallel with resilient springs. The piston within the cylinder of the actuator of the devices divides the cylinder into two chambers. A first surface of the piston acts in an upper chamber and is of a greater area than the second surface which acts in the lower chamber. This occurs since the bottom surface of the piston is attached to an arm which is pivotally connected to a suspension linkage. The arm connecting the suspension linkage to the piston extends throughout the bottom chamber of the piston longitudinally along the actuator and extends through an aperture defined in the bottom surface of the cylinder to connect with the suspension linkage.

In GB-A-2199618 there is described an active suspension system which has an actuator which has a piston with a first face of a large surface area acting in a first chamber and a second face of a smaller surface acting in a second chamber. The servo-valve controlling the actuator has three operating conditions, a first in which the actuator is locked solid and no fluid is allowed to flow out of either chamber, a second in which fluid is allowed to flow into the first chamber from a pump and fluid is allowed to flow out of the second chamber to a reservoir for the pump and a third in which fluid is allowed to flow out of the first chamber to the reservoir for the pump and into the second chamber from the pump.

In EP-A-0371709, comprising the features defined in the preamble of claim 1, the applicants disclosed a modification of a vehicle suspension device which has energy saving features. The vehicle suspension device disclosed in EP-A-0371709 comprises an actuator wherein one surface of the piston has an area twice as large as the other surface of the piston. The chamber in which the smaller surface acts is permanently connected to a source of pressurised fluid. The difference in area between the two sides of the piston enables a resultant force to be applied in both directions to the piston. The vehicle suspension device disclosed in EP 0371709 further comprises an accumulator which can be selectively connected to the upper chamber of the actuator, to either store energy in the form of pressurised fluid or to impart energy to the piston.

In most active suspension systems it is important to achieve actuation of the vehicle suspension devices with minimum energy input. In general, the power needed to provide a source of pressurised fluid for an active vehicle suspension system is provided by the engine of the vehicle. Therefore the performance and the economy of the vehicle are affected by the efficiency of the active suspension system.

The present invention provides a vehicle suspension device comprising: an actuator having a piston within a cylinder, which piston divides the cylinder into at least two chambers, a first surface of the piston acting in a first chamber of the cylinder being of smaller area than the second surface of the piston acting in a second chamber, a source of pressurised fluid, an exhaust for pressurised fluid and valve means, wherein

the valve means has a first operating condition in which the valve means has two modes of operation, a first mode in which the valve means connects both of the first and second chambers to the source of pressurised fluid and a second mode in which the valve means connects the first chamber to the source of pressurised fluid and connects the second chamber to the exhaust for pressurised fluid, the valve means in the first operating condition metering flow of fluid into or out of either of the first or second chambers to control piston movement,

characterised in that the valve means has a second operating condition in which the valve means connects the second chamber to the source of pressurised fluid and connects the first chamber to the exhaust for pressurised fluid, the valve means metering the flow of fluid out of the first chamber to control piston movement.

Preferably the actuator acts in parallel with resilient means to support the weight of the vehicle and a part of the static weight of the vehicle is supported by the actuator, the vehicle suspension downward force on the piston when the vehicle is stationary to support part of the static weight.

In one preferred embodiment the valve means comprises a four port valve which selectively connects one of the chambers to the source of pressurised fluid whilst metering the flow of fluid into the other chamber from the source of pressurised fluid or out of the other chamber to the exhaust for pressurised fluid.

In a second preferred embodiment the valve means comprises two valves, a four port valve having only two operating conditions and a three port spool valve, wherein the four port valve selectively connects one chamber to the source of pressurised fluid whilst connecting the other chamber to the three port spool valve and the three port spool valve meters the flow of fluid into the latter chamber from the source of pressurised fluid or out of the latter chamber to the exhaust for pressurised fluid.

Preferably a rod is secured to the first surface of the piston and extends longitudinally along the first chamber and through an aperture in a wall thereof to interconnect the piston and a road wheel hub assembly device, thereby forming the reduced area of the first surface of the piston in comparison with the second surface thereof.

Preferably the vehicle suspension device comprises a processor for generating signals to control the valve means.

The invention further provides an active suspension system for a vehicle comprising vehicle suspension devices as hereinbefore described.

Preferred embodiments of the present invention will be described with reference to the accompanying drawings in which;

Figure 1 shows a vehicle suspension device commonly used in the prior art.

Figure 2 shows schematically the configuration of a spool valve that would commonly be used with the vehicle suspension device shown in Figure 1.

Figure 3 shows one embodiment of a vehicle suspension device according to the present invention.

Figures 4a and 4b show two positions of the spool valve of the vehicle suspension device shown in Figure 3.

Figure 5 shows a second embodiment of a vehicle suspension device according to the invention.

Figure 6 shows a graphical representation of the performance of the actuators shown in Figures 1 and 3 for several operating conditions.

Figure 7 shows a graphical representation of the performance of the actuator in Figure 3 in one particular operating condition.

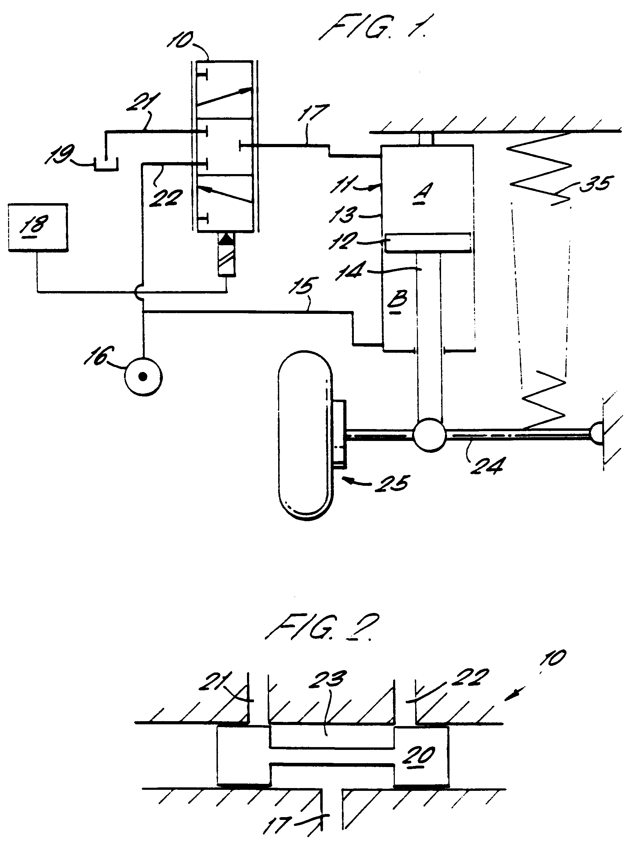

In Figure 1 there can be seen a vehicle suspension device according to the prior art. The vehicle suspension device comprises valve means 10 and an actuator 11. The actuator 11 comprises a piston 12 which acts within a cylinder 13. The piston 12 divides the cylinder 13 into two chambers A and B. The piston 12 is connected via an arm 14 to a suspension linkage 24 which is in turn connected to a wheel and hub assembly 25 of the vehicle.

The bottom chamber B of the actuator 11 is permanently connected via a line 15 to a source of pressurised fluid 16. The top chamber A of the actuator 11 is connected by line 17 to the valve means 10. The valve means 10 is controlled by an electrical control signal generated by a processor 18. The valve means 10 can connect the chamber A to either the source of pressurised fluid 16 or to an exhaust for pressurised fluid 19. The valve means 10 meters the flow of hydraulic fluid into and out of the chamber A to control motion of the piston 12 within the cylinder 13.

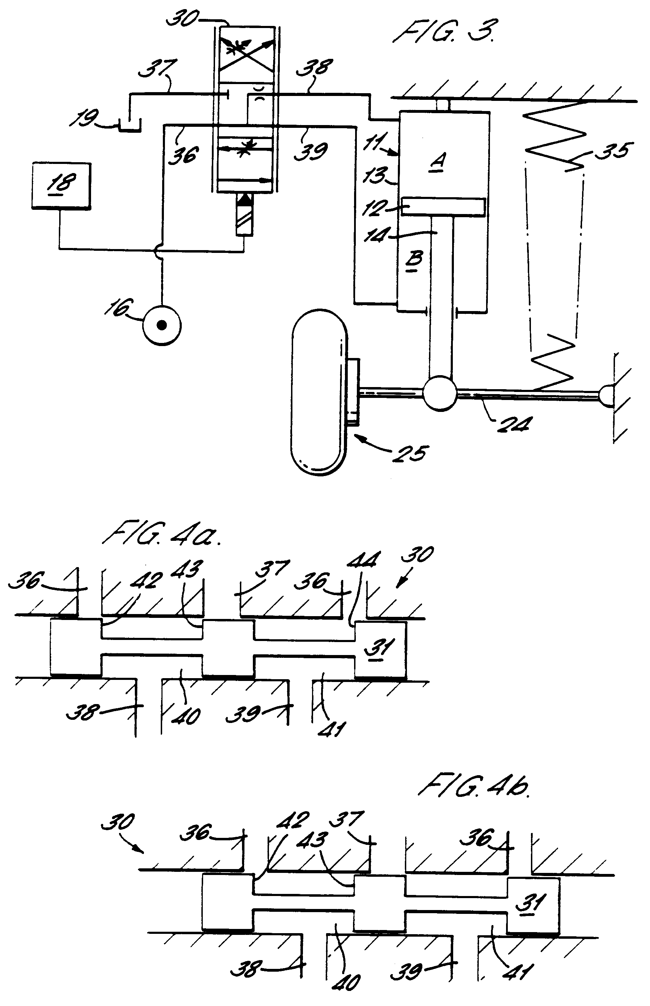

A typical configuration of the valve means 10 can be seen in Figure 2. The valve means 10 comprises a spool member 20 which can be controlled to move in an axial direction within a surrounding housing. The spool valve is shown in its centered position in which the chamber A is neither connected to the exhaust for pressurised fluid 19 nor to the source of pressurised fluid 16. Displacement of the member 20 to the left as shown in the figure allows fluid to flow from the passage 17 to a "return" passage 21 which is connected to the exhaust for pressurised fluid 19. Motion of the member 20 to the right of its position shown in Figure 2 connects the chamber 17 to the source of pressurised fluid 16 via a "source" line 22. The spool valve 10 controls the amount of fluid flowing into the chamber A by varying the restriction on fluid passing from the source line 22 via an annular cavity 23 defined in the member 20 to the line 17. The spool valve 10 similarly controls the flow of fluid out of the chamber A by restricting the flow of fluid from the line 19 via the annular cavity 23 out into the return line 21.

The area of the surface of piston 12 acting in chamber A is typically twice the area of the surface of the piston 12 acting in chamber B, therefore if the area of the surface acting in chamber B is A1 then the area of the surface acting in chamber A is 2A1. If the pressure in the system is Ps then the maximum upward force that can be applied on the piston 12 is $zero - Ps \times A1 = -PsA1$ and this occurs when the chamber A is connected to the exhaust for pressurised fluid and the pressure in the chamber A is 0 (the pressure in chamber B always being Ps). If chamber A is connected fully to supply then the maximum downward force is achieved, that is to say $Ps \times 2A1 - Ps \times A1 = + PsA1$. This can be seen graphically in Figure 6 as case 1.

Any reduction in system pressure leads to a decrease in the maximum and minimum forces that can be applied to the piston, as can be seen graphically in case 2 of Fig 6 in which the piston pressure is reduced to 50% of the original system pressure and in case 3 where the system pressure is reduced to 66% of the original system pressure. In the art the difference between the maximum upward and maximum downward force that can be applied to a piston is termed the "authority" of the actuator. It can be seen that with the standard system of the prior art the authority of an actuator is diminished with decreasing system pressure. For a given suspension arrangement a "Required Authority Window" is calculated and this can be seen defined by the two dotted lines 100 and 200. It should be appreciated that a "Required Authority Window" will define a required maximum upward force and a maximum required downward force.

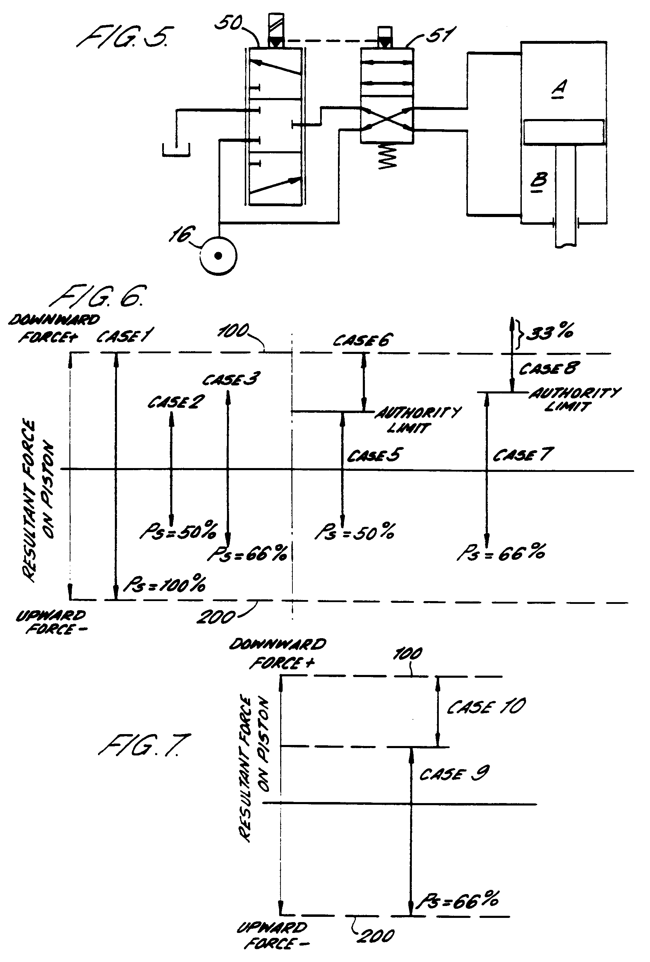

The first embodiment of the vehicle suspension device according to the invention can be seen in Figure 3. The embodiment comprises the same actuator 11 as shown in the prior art system of Figure 1 and like components shall be referenced accordingly. Once again, the actuator 11 comprises a piston 12 acting within a cylinder 13. The piston 12 is again connected via a rod 14 extending out of the cylinder 13 to a suspension arm 24. Movement of the piston 12 within the cylinder 13 causes associated motion of the suspension linkage 24 and an associated assembly 25. The first embodiment according to the present invention differs from the prior art vehicle suspension device in incorporating a different valve means 30.

The spool arrangement for the valve means 30 can be seen in Figures 4a and 4b in two different positions. As with the prior art valve, the valve means 30 is controlled by electrical control signals generated by processing means 18. The valve means 30 controls the flow of fluid to and from the chambers A and B by motion of a spool member 31 within the valve housing. The spool member 31 moves in response to the electrical control signals received from the processing means 18.

The valve means 30 has two operating conditions. In the first operating condition, shown in Fig 4a, the chamber B is connected by lines 39 and 36 and the annular cavity 41 to the source 16, whilst the fluid flowing into and out of chamber A is metered by the valve means. The valve means meters the flow of fluid into and out of chamber A by controlling the flow of fluid from passage 36 and to passage 37 via the annular cavity 40 in the spool member 31. The spool valve meters the flow by controlling the position of the two edges 42 and 43. By controlling the flow of fluid, the valve means controls movement of the piston 12.

In the second operating condition the chamber A is connected to the source for pressurised fluid whilst the flow of fluid out of the chamber B is metered, which corresponds to the spool valve position shown in Figure 4b.

Considering the first operating condition, the maximum upward force on the piston is the same as in the embodiment of the prior art and occurs when the pressure in chamber B is system pressure Ps and the chamber A is connected to the exhaust for pressurised fluid in chamber A, the pressure therein therefore being zero. The total upward force on the piston 12 is hence zero x A1 - Ps x A1 = -PsA1 .

Considering the second operating condition, the maximum downward force on the piston 12 that can be achieved by the embodiment of the invention as shown in Figure 3 is twice the value of the maximum achievable downward force of the embodiment shown in Figure 1 for the same system pressure Ps. The maximum downward force upon the piston 12 is achieved when the system pressure of Ps is prevalent in chamber A and chamber B is connected to the exhaust for pressurised fluid 19, therefore the pressure of the fluid in chamber B is zero. As with the embodiment of the prior art shown in Figure 1, we shall take the surface area of the piston surface acting in chamber B to be A1 and the surface area of the surface of the piston acting in chamber A to be twice that area, that is to say 2A1. Therefore the maximum downward force is Ps x 2A1 - zero x A1 = +2PsA1 .

The spool valve of the invention as shown in Figure 3 controls the velocity of motion of the piston 12 in both operating conditions shown in Figures 4a, 4b described before. In Figure 4a the bottom chamber B is connected to the source of pressurised fluid and the pressure of the fluid within chamber B is Ps. The flow of fluid into and out of chamber A is metered by the valve which controls the velocity of the piston by controlling the flow of fluid. In this first operating condition, chamber B is kept at full system pressure by the valve means and the pressure of the fluid in chamber A is selected to be system pressure or zero by positioning the spool valve to either meter supply to the chamber A from supply or to meter fluid expelled from chamber A to exhaust. The valve means 30 controls the movement of the piston 12 by controlling the magnitude of the flow of fluid either from the inlet 36 or to the outlet 37 via the annular aperture 40 using the two spool member edges 42 and 43. The valve means in the first operating condition can achieve the "authority" shown graphically in Figure 6 as case 5 when operating at a system pressure of 50% Ps.

The valve means in the second condition (shown in Figure 4b) connects the chamber A to system pressure and connects the chamber B to the exhaust for pressurised fluid and meters the flow of fluid out of chamber B to control piston velocity. Chamber A is always connected to the source 16 in the second operating condition and the spool member 31 is controlled to vary the magnitude of the flow of fluid from chamber B to the exhaust 17, thereby controlling piston movement. The spool member controls the velocity of piston 12 by limiting the fluid flowing through the annular cavity 41 to the outlet 37 by controlling the edge 44 of the spool member 41.

In the second operating condition, the valve means can cause the actuator to operate with the authority shown as case 6 in Figure 6. The downward maximum force achievable is PsA1. Therefore when the actuator is operated using the valve with a system pressure of 50% Ps, the actuator can still achieve a maximum downward force of PsA1, equivalent to the maximum downward force achievable using the actuator of Figure 1 with a system pressure of 100% Ps.

By using a system pressure of 66% Ps with the arrangement of Figure 3 it is possible to achieve a maximum possible difference between achievable resultant forces equivalent to that of the actuator of Figure 1 operating at 100% Ps. This is shown graphically as cases 7 and 8 in Figure 6. It can be clearly seen from cases 7 and 8 that when the arrangement of Figure 3 is used with 66% system pressure it can achieve a maximum upward force of two-thirds PsA1 and a maximum downward force of one and one-third PsA1. The total difference between possible resultant forces of the actuator is still 2PsA1, whilst the actuator is operating with a system pressure that is only two-thirds of that required by the actuator of Figure 1 to operate with the same difference between achievable resultant forces.

It can be seen from cases 7 and 8 of the Figure 6 that the midpoint between the maximum achievable upward force and the maximum achievable downward force of the actuator of Figure 3 is shifted from the value of zero force. Therefore the maximum upward force for a given required authority cannot be achieved using the valve means 30 and a reduced system pressure in the hereinbefore mentioned active suspension systems. However, this problem can be overcome.

In the prior art system of Figure 1 a spring 35 acting in parallel with the actuator 11 takes the full static weight of the automobile at the mid-range of the "authority" of the actuator, so that the actuator is always attempting to extend the spring or contract the spring when moving the wheel/hub assembly. The static weight of the vehicle is the weight of the vehicle that acts on the actuator and spring when the sprung mass of the vehicle is stationary.

The actuator 11 of Figure 3 again acts in parallel with the spring 35 to support the vehicle body. The problem of the difference in magnitudes between the maximum upward force and the maximum downward force that can be applied to the piston of the actuator controlled by valve means 30 can be overcome by allowing the actuator to support a portion of the static weight of the vehicle such that the authority of the system matches the required authority window. In other words, downward force is applied on the piston to support some of the static weight of the vehicle, and the spring 35 supports less than the total static weight of the vehicle. This shift can be seen as cases 9 and 10 in Figure 7. Whereas no force is applied across the piston of the prior art when the vehicle is stationery, in the preferred embodiment of the present invention a force is applied to support a portion of the vehicle weight which we shall call $W_1$. Therefore the resultant maximum and minimum forces across the piston that can be applied are shifted by $W_1$. Thus, with the actuator controlled by the valve means 30 a system pressure of two thirds of system pressuire required in the prior art can be used to achieve the full authority required by the suspension system.

Case 9 represents the authority of the actuator 11 with the valve means 30 in the first operating condition and with the actuator 11 supporting some of the static weight of the vehicle.

Case 10 represents the authority of the actuator 11 with valve means 30 in the second operating condition and with the actuator 11 supporting some of the same weight of the vehicle. The maximum authority required is achieved with a system pressure that is 66% of the system pressure required by the prior art system to achieve the same maximum authority.

It will be appreciated that the invention provides a means whereby an "unequal" area actuator can have the same authority as in the prior art whilst using only 66% of the system pressure required by the prior art systems.

A second embodiment of the present invention can be seen in Figure 5. The embodiment shown in Figure 5 operates in essentially the same manner as the embodiment shown in Figure 3. Instead of comprising one valve the system uses two valves, a spool valve 50 and a switching valve 51. The switching valve 51 is a simple valve which has two positions. In the first position the valve 51 connects the chamber B to the source of system pressure 16 whilst connecting the chamber A to the spool valve 50. The spool valve 50 then meters the flow of fluid into and out of the chamber A, selectively connecting the chamber A to either the source of pressurised fluid to the exhaust for pressurised fluid. In the second condition of the switching valve 51 the chamber A is connected permanently to the source of system pressure 16 whilst the chamber B is connected to the spool valve 50 which meters the flow of fluid out of the chamber B. Clearly the embodiment shown in Figure 5 operates in the same manner as the embodiment shown in Figure 3, with one chamber being permanently connected to a source of pressurised fluid, whilst flow is metered into or out of the other chamber.

It will be appreciated from the foregoing that the actuator of the present invention provides an improvement over the previous unequal area actuator as shown in Figure 1, since the system can operate with a full operating window of authority at two-thirds of the system pressure required by the previous actuator to operate with the same operating window.

The invention also provides an improvement over those systems of the prior art which use valves adapted to connect one chamber of an actuator to either a source of pressurised fluid when the other is connected to an exhaust and vice versa. The present system uses a valve which connects one side of the actuator fully to a source of pressurised fluid and selectively connects the other side to either a source of pressurised fluid or exhaust meters the flow into or out of only one of the chambers. A simplified valve arrangement is therefore accomplished.

The system described above provides an actuator which can operate with a system pressure of two-thirds of the system pressure that will be required by the "unequal area" actuators of the prior art. The saving in system pressure is advantageous since less power is required to operate the system and therefore the efficiency of the engine power of the car is less impaired. Also, the decrease in system pressure lessens the problems of keeping the system fluid tight and results in reduced leakage out of the pressurised system.

**Claims**

1.  A vehicle suspension device comprising:

    an actuator (11) having a piston (12) within a cylinder (13), which piston (12) divides the cylinder (13) into at least two chambers (A,B), a first surface of the piston (12) acting in a first chamber (B) of the cylinder being of smaller area than a second surface of the piston (12) acting in a second chamber (A),

    a source of pressurized fluid (16),
    an exhaust for pressurized fluid (19), and
    valve means (30;50,51), wherein

the valve means (30) has a first operating condition in which the valve means (30;50,51) has two modes of operation, a first mode in which the valve means (30;50,51) connects both of the first and second chambers (A,B) to the source of pressurised fluid (16) and a second mode in which the valve means (30;50,51) connects the first chamber (B) to the source of pressurised fluid and connects the second chamber (A) to the exhaust for pressurised fluid (19), the valve means in the first operating condition metering flow of fluid into or out of either of the first or second chambers (A,B) to control piston movement,

characterised in that the valve means has a second operating condition in which the valve means (30;50;51) connects the second chamber (A) to the source of pressurised fluid (16) and connects the first chamber (B) to the exhaust for pressurised fluid (19), the valve means (30;50;51) metering the flow of fluid out of the first chamber (B) to control piston movement.

2. A vehicle suspension device as claimed in Claim 1 wherein the actuator (11) acts in parallel with resilient means (35) to support the weight of the vehicle.

3. A vehicle suspension device as claimed in Claim 2 wherein a part of the static weight of the vehicle is supported by the actuator (11), the vehicle suspension device applying a downward force on the piston (12) when the vehicle is stationary to support part of the static weight.

4. A vehicle suspension device as claimed in any one of the preceding claims wherein the valve means comprises a four port valve (30) which selectively connects one of the chambers (A,B) to the source of pressurised fluid (16) whilst metering the flow of fluid out of the other chamber (A,B) to the exhaust for pressurised fluid (19).

5. A vehicle suspension device as claimed in any one of the preceding claims wherein the valve means comprises a four port valve (30) which selectively connects one of the chambers (A,B) to the source of pressurised fluid (16) whilst metering flow into the other chamber (A,B) from the source of pressurised fluid (16).

6. A vehicle suspension device as claimed in any one of claims 1, 2 or 3 wherein the valve means comprises two valves, a four port switching valve (51) having only two operating positions and a three port spool valve (50), wherein the four port valve (51) selectively connects one chamber (A,B) to the source of pressurised fluid (16) whilst connecting the other chamber (A,B) to the three port spool valve (50) and the three port spool valve (50) can meter flow of fluid into the latter chamber from the source of pressurised fluid (16) and can meter flow of fluid out of the latter chamber to the exhaust for pressurised fluid (19).

7. A vehicle suspension device as claimed in any one of the preceding claims wherein a rod (14) secured to the first surface of the piston (12) extends longitudinally along the first chamber (B) and through an aperture in a wall thereof to interconnect the piston (12) and a road wheel hub assembly (24,25), thereby forming the reduced area of the first surface of the piston (12) in comparison with the second surface thereof.

8. A vehicle suspension device as claimed in any one of the preceding claims comprising a processor (18) for generating signals to control the valve means (30;50;51).

9. An active suspension system for a vehicle comprising vehicle suspension devices as claimed in any one of the preceding claims.

**Patentansprüche**

1. Vorrichtung zur Fahrzeugaufhängung, die aufweist:

- eine Betätigungseinrichtung (11) mit einem Innerhalb eines Zylinders (13) angeordneten Kolben (12), der den Zylinder (13) in wenigstens zwei Kammern (A,B) aufteilt, wobei eine erste, in einer ersten Kammer (B) des Zylinders wirkende Oberfläche des Kolbens (12) eine kleinere Fläche aufweist als eine zweite, in einer zweiten Kammer (A) wirkende Oberfläche des Kolbens (12),
- eine Quelle druckbeaufschlagten Fluids (16),
- einen Auslaß (19) für druckbeaufschlagtes Fluid,
- und Ventileinrichtungen (30;50,51),

wobei die Ventileinrichtung (30) einen ersten Betriebszustand aufweist, in dem die Ventileinrichtung (30;50,51) zwei Betriebsarten besitzt, und zwar eine erste Betriebsart, bei der die Ventileinrichtung (30;50,51) sowohl die erste als auch die zweite Kammer (A,B) mit der Quelle für druckbeaufschlagtes Fluid (16) verbindet, und eine zweite Betriebsart, bei der die Ventileinrichtung (30;50,51) die erste Kammer (B) mit der Quelle für druckbeaufschlagtes Fluid und die zweite Kammer (A) mit dem Auslaß (19) für das druckbeaufschlagte Fluid verbindet, wobei die Ventileinrichtung im ersten Betriebszustand den Fluidstrom in die oder aus der entweder ersten oder zweiten Kammer (A,B) zur Steuerung der Kolbenbewegung dosiert, dadurch gekennzeichnet, daß die Ventileinrichtung einen zweiten Betriebszustand aufweist, in dem die Ventileinrichtung (30;50;51) die zweite Kammer (A) mit der Quelle für druckbeaufschlagtes Fluid (16) verbindet und die erste Kammer (B) mit dem Auslaß (19) für druckbeufschlagtes Fluid verbindet, wobei die Ventileinrichtung (30;50;51) den Fluidstrom aus der ersten Kammer (B) zur Steuerung der Kolbenbewegung dosiert.

2. Vorrichtung zur Fahrzeugaufhängung nach Anspruch 1, dadurch gekennzeichnet, daß die Betätigungseinrichtung (11) parallel mit einer elastischen Einrichtung (35) wirkt, um das Gewicht des Fahrzeugs zu tragen.

3. Vorrichtung zur Fahrzeugaufhängung nach Anspruch 2, dadurch gekennzeichnet, daß ein Teil des statischen Gewichts des Fahrzeugs durch die Betätigungseinrichtung (11) abgestützt ist, wobei die Vorrichtung zur Fahrzeugaufhängung eine nach unten gerichtete Kraft auf den Kolben (12) ausübt, um einen Teil des statischen Gewichts des Fahrzeugs zu tragen, wenn sich dieses in einem stationären Zustand befindet.

4. Vorrichtung zur Fahrzeugaufhängung nach einem der Ansprüche 1 bis 3, dadurch gekennzeichnet, daß die Ventileinrichtung ein Ventil (30) mit vier Anschlüssen aufweist, das wahlweise eine der Kammern (A,B) mit der Quelle für druckbeaufschlagtes Fluid (16) verbindet, während der Fluidstrom aus der anderen Kammer (A,B) zum Auslaß (19) für druckbeaufschlagtes Fluid dosiert wird.

5. Vorrichtung zur Fahrzeugaufhängung nach einem der vorhergehenden Ansprüche, dadurch gekennzeichnet, daß die Ventileinrichtung ein Ventil (30) mit vier Anschlüssen aufweist, das wahlweise eine der Kammern (A,B) mit der Quelle für druckbeaufschlagtes Fluid (16) verbindet, während ein Fluidstrom aus der Quelle für druckbeaufschlagtes Fluid (16) in die andere Kammer (A,B) dosiert wird.

6. Vorrichtung zur Fahrzeugaufhängung nach einem der Ansprüche 1, 2 oder 3, dadurch gekennzeichnet, daß die Ventileinrichtung zwei Ventile aufweist, ein Schallventil (51) mit vier Anschlüssen, das nur zwei Betriebsstellungen aufweist, und ein Steuerventil (50) mit drei Anschlüssen, wobei das Ventil (51) mit vier Anschlüssen wahlweise eine der Kammern (A,B) mit der Quelle für druckbeaufschlagtes Fluid (16) verbindet, während die andere Kammer (A,B) mit dem Steuerventil (50) mit drei Anschlüssen verbunden ist und dieses Steuerventil (50) mit drei Anschlüssen der Fluidstrom aus der Quelle für druckbeaufschlagtes Fluid (16) in letztere Kammer dosieren kann und den Fluidstrom aus letzterer Kammer in den Auslaß für druckbeaufschlagtes Fluid (19) dosieren kann.

7. Vorrichtung zur Fahrzeugaufhängung nach einem der vorhergehenden Ansprüche, dadurch gekennzeichnet, daß eine mit der ersten Oberfläche des Kolbens (12) verbundene Stange (14) sich in Längsrichtung entlang dar ersten Kammer (B) und durch eine Öffnung in deren Wand hindurch erstreckt, um den Kolben (12) und eine Radnabenanordnung (24,25) miteinander zu verbinden, wodurch die reduzierte Oberfläche der ersten Oberfläche des Kolbens im Vergleich zu dessen zweiter Oberfläche gebildet ist.

8. Vorrichtung zur Fahrzeugaufhängung nach einem der vorhergehenden Ansprüchen, dadurch gekennzeichnet, daß sie einen Prozessor (18) umfaßt, der Steuersignale für die Ventileinrichtung (30;50;51) erzeugt.

9. Aktives Fahrzeugaufhängungssystem, dadurch gekennzeichnet, daß es eine Vorrichtung zur Fahrzeugaufhängung nach einem der Ansprüche 1 bis 8 aufweist.

**Revendications**

1. Dispositif de suspension de véhicule comprenant :
   un actionneur (11) ayant un piston (12) contenu dans un cylindre (13), lequel piston (12) divise le cylindre (13) en au moins deux chambres (A, B), une première surface du piston (12) travaillant dans une première chambre (B) du cylindre ayant une aire plus petite qu'une seconde surface du piston (12) travaillant dans une seconde chambre (A),
   une source de fluide pressurisé (16),
   une évacuation de fluide pressurisé (19), et
   un moyen de soupape (30 ; 50 ; 51) dans lequel
   le moyen de soupape (30) a un premier état de fonctionnement dans lequel le moyen de soupape (30 ; 50 ; 51) a deux modes de fonctionnement, un premier mode de fonctionnement dans lequel le moyen de soupape (30, 50, 51) relie les deux première et seconde chambres (A,B) à la source de fluide pressurisé (16) et un second mode dans lequel le moyen de soupape (30; 50 ; 51) relie la première chambre (B) à la source de fluide pressurisé et relie la seconde chambre (A) à l'évacuation de fluide pressurisé (19), le moyen de soupape dans le premier état de fonctionnement mesurant le débit de fluide dans ou en sortie soit de la première soit de la seconde des chambres (A,B) pour commander le mouvement du piston,
   caractérisé en ce que le moyen de soupape a un second état de fonctionnement dans lequel le moyen de soupape (30 ; 50 ; 51) relie la seconde chambre (A) à la source de fluide pressurisé (16) et relie la première chambre (B) à l'évacuation de fluide pressurisé (19), le moyen de soupape (30 ; 50 ; 51) mesurant le débit de fluide en sortie de la première chambre (B) pour commander le mouvement du piston.

2. Dispositif de suspension de véhicule selon la revendication 1, caractérisé en ce que l'actionneur (11) fonctionne en parallèle avec un moyen élastique (35) pour supporter le poids du véhicule.

3. Dispositif de suspension de véhicule selon la revendication 2, caractérisé en ce qu'une partie du poids statique du véhicule est supportée par l'actionneur (11), le dispositif de suspension de véhicule appliquant vers le bas une force sur le piston (12) lorsque le véhicule est immobile pour supporter une partie du poids statique.

4. Dispositif de suspension de véhicule selon l'une quelconque des revendications précédentes caractérisé en ce que le moyen de soupape comprend une soupape à quatre portes (30) qui relie sélectivement l'une des chambres (A, B) à la source de fluide pressurisé (16), tout en mesurant le débit en sortie de l'autre chambre (A, B) vers l'évacuation de fluide pressurisé (19).

5. Dispositif de suspension de véhicule selon l'une quelconque des revendications précédentes caractérisé en ce que le moyen de soupape comprend une soupape à quatre portes (30), qui relie sélectivement l'une des chambres (A, B) à la source de fluide pressurisé (16), tout en mesurant le débit dans l'autre chambre (A, B) en provenance de la source de fluide pressurisé (16).

6. Dispositif de suspension de véhicule selon l'une quelconque des revendications 1, 2 ou 3 caractérisé en ce que le moyen de soupape comprend deux soupapes, une soupape de commutation à quatre portes (51) ayant seulement deux positions de fonctionnement et une soupape à tiroir à trois portes (50), caractérisé en ce que la soupape à quatre portes (51) relie sélectivement l'une des chambres (A, B) à la source de fluide pressurisé (16) tout en reliant l'autre chambre (A, B) à la soupape à tiroir à trois portes (50) et la soupape à tiroir à trois portes (50) peut mesurer le débit de fluide dans cette dernière chambre en provenance de la source de fluide pressurisé (16) et peut mesurer le débit de fluide en sortie de cette dernière chambre vers l'évacuation de fluide pressurisé (19).

7. Dispositif de suspension de véhicule selon l'une quelconque des revendications précédentes caractérisé en ce qu'une tige (14) fixée à la première surface du piston (12) s'étend longitudinalement dans la première chambre (B) et à travers une ouverture ménagée dans une paroi de celle-ci pour relier le piston (12) à un montage roue-moyeu (24, 25), formant ainsi l'aire réduite de la première surface du piston (12) en comparaison avec la seconde surface de ce dernier.

8. Dispositif de suspension de véhicule selon l'une quelconque des revendications précédentes comprenant un microprocesseur (18) pour générer des signaux pour commander le moyen de soupape (30 ; 50 ; 51).

9. Système de suspension active pour un véhicule comprenant des dispositifs de suspension de véhicule selon l'une quelconque des revendications précédentes.

# FIG. 1.

# FIG. 2.

FIG. 3.

FIG. 4a.

FIG. 4b.

FIG. 5.

FIG. 6.

DOWNWARD FORCE+    CASE 1     100     CASE 6     33%

CASE 3

CASE 2    AUTHORITY LIMIT    CASE 8    AUTHORITY LIMIT

RESULTANT FORCE ON PISTON

CASE 5     CASE 7

Ps=50%     Ps=50%

Ps=66%     Ps=66%

Ps=100%

UPWARD FORCE −     200

FIG. 7.

DOWNWARD FORCE +     100

CASE 10

RESULTANT FORCE ON PISTON

CASE 9

Ps=66%

UPWARD FORCE −     200

11